(19) Europäisches Patentamt
European Patent Office
Office européen des brevets

(11) Veröffentlichungsnummer: **0 064 233**
**B1**

(12) # EUROPÄISCHE PATENTSCHRIFT

(45) Veröffentlichungstag der Patentschrift: **25.09.85**

(51) Int. Cl.⁴: **H 01 M 10/39**

(21) Anmeldenummer: **82103426.1**

(22) Anmeldetag: **23.04.82**

(54) **Elektrochemische Speicherzelle.**

(30) Priorität: **02.05.81 DE 3117382**

(43) Veröffentlichungstag der Anmeldung:
**10.11.82 Patentblatt 82/45**

(45) Bekanntmachung des Hinweises auf die Patenterteilung:
**25.09.85 Patentblatt 85/39**

(84) Benannte Vertragsstaaten:
**BE GB IT NL**

(56) Entgegenhaltungen:
**EP - A - 0 044 638**
**DE - A - 2 638 484**
**FR - A - 2 309 052**
**GB - A - 1 548 263**
**US - A - 4 220 691**

**EXTENDED ABSTRACTS, Nr. 81-1, Zusammenfassung Nr. 469, Mai 1981, Seiten 1161-1162 D.S. DEMOTT et al.: "The sodium/beta alumina interface"**
**C.A. Vol. 94 1981, Seite 508 Abstr. 129119**

(73) Patentinhaber: **BROWN, BOVERI & CIE Aktiengesellschaft, Kallstadter Strasse 1, D-6800 Mannheim 31 (DE)**

(72) Erfinder: **Steinleitner, Günther, Dr., Dipl.-Chem., Siegfriedstrasse 30, D-6905 Schriesheim (DE)**

(74) Vertreter: **Kempe, Wolfgang, Dr. et al, c/o BROWN, BOVERI & CIE AG Kallstadter Strasse 1 Postfach 351, D-6800 Mannheim 31 (DE)**

**EP 0 064 233 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf eine elektrochemische Speicherzelle gemäss dem Oberbegriff des Anspruches 1.

Solche wieder aufladbaren elektrochemischen Speicherzellen mit Festelektrolyten eignen sich sehr gut zum Aufbau von Akkumulatoren höherer Energie- und Leistungsdichte. Der zum Beispiel bei Natrium/Schwefel-Speicherzellen verwendete Festelektrolyt aus Beta-Aluminiumoxid lässt nur Natriumionen passieren. Dies bedeutet, dass im Gegensatz zum Bleiakkumulator praktisch keine Selbstentladung stattfindet und beim Entladen keine Nebenreaktionen ablaufen, wie etwa eine Wasserzersetzung beim Blei/Bleioxid/System. Die Stromausbeute, das heisst der Faraday-Wirkungsgrad einer Natrium/Schwefel-Speicherzelle liegt bei 100%.

Ein wesentlicher Nachteil besteht bei diesen Speicherzellen darin, dass das Einfüllen des Alkalimetalls in den Anodenraum der Speicherzellen nur mit einem erheblichen technischen Aufwand durchgeführt werden kann. Das Einfüllen des Alkalimetalls ist insbesondere deshalb so problematisch, da vorzugsweise Natrium in den Anodenraum der Speicherzellen gefüllt wird. Das Einfüllen des Natriums in den Anodenraum muss im Vakuum oder unter einem Schutzgas erfolgen. Der gefüllte Anodenraum muss ebenfalls unter Vakuumbedingungen beziehungsweise unter einem Schutzgas verschlossen werden.

Natrium ist bekanntlich ein sehr stark elektronegatives Metall, das ein sehr grosses Reduktionsvermögen besitzt, so dass es vom Luftsauerstoff, insbesondere von feuchter Luft, stark oxidiert wird. Sauerstoff darf in keinem Fall innerhalb der Zelle vorhanden sein, da hierdurch das elektrische Verhalten verschlechtert wird. Insbesondere kommt es hierdurch zu einem Anstieg des Widerstandes durch Bildung einer hochohmigen $Na_2O$-Schicht auf dem Festelektrolyten. Ferner wird durch vorhandenen Sauerstoff innerhalb der Zelle die Korrosionswirkung des sauerstoffhaltigen Natriums auf metallische Zellkomponenten, insbesondere auf die Dichtung und auf das Verbindungsglas zwischen dem Alpha- und Beta-Aluminiumoxid verstärkt.

Aus der DE-OS 2 638 484 ist eine elektrochemische Speicherzelle bekannt, die ein metallisches Gehäuse aufweist, innerhalb dessen ein becherförmiger Festelektrolyt angeordnet ist. Um den Festelektrolyten vor hohen Druckbeanspruchungen zu bewahren, ist zwischen der Innenfläche des Zellgehäuses und dem Festelektrolyten eine Zusammendrückeinrichtung vorgesehen. Diese ist als Draht ausgebildet und aus Aluminium, rostfreiem Stahl oder Kupfer gefertigt.

Aus der GB-PS 1 548 263 ist ebenfalls eine elektrochemische Speicherzelle bekannt, bei der um den Festelektrolyten eine als Kapillarstruktur dienende Folie aus Eisen angeordnet ist. Diese Folie hat die Aufgabe, das Natrium so zu leiten, dass die Aussenfläche des Festelektrolyten ständig damit benetzt wird. Nach aussenhin wird der Anodenraum durch das metallische Gehäuse der Speicherzelle begrenzt, das aus Aluminium gefertigt ist.

Aus der US-PS 4 220 691 ist eine elektrochemische Speicherzelle bekannt, innerhalb derer ein Gettermaterial angeordnet ist, mit dem Kalium oder Erdalkalimetalle eingefangen werden können. Dieses Gettamaterial hat die Aufgabe, den Festelektrolyten vor den oben genannten Metallen zu schützen.

Der Erfindung liegt die Aufgabe zugrunde, eine Speicherzelle zu schaffen, bei der die Anreicherung des Anodenraums mit gebundenem oder freiem Sauerstoff vollständig vermieden wird.

Die Aufgabe wird erfindungsgemäss durch die kennzeichnenden Merkmale des Patentanspruchs 1, 2, 3, 4 oder 5 gelöst.

Die Menge des in den Anodenraum eingefüllten Fangstoffes beträgt nur wenige Gramm. Das Natrium und der Fangstoff werden nacheinander, voneinander getrennt, in den Anodenraum eingefüllt. Der Fangstoff kann in den Metallfilz eingelagert werden, der innerhalb des Anodenraums angeordnet ist. Wird der Fangstoff lose in den Anodenraum gegeben, so kann er vor oder nach dem Natrium in diesen eingefüllt werden. Als Fangstoff kann ein Metall der zweiten oder dritten Hauptgruppe des Periodensystems verwendet werden. Ebenso besteht die Möglichkeit ein Übergangsmetall, ein Lanthanidenmetall oder ein Actinidenmetall zu verwenden.

Eine Metallegierung, die Metalle der zweiten und dritten Hauptgruppe des Periodensystems, Übergangsmetalle, Lanthanidenmetalle und Actinidenmetalle enthält, ist ebenfalls als Fangstoff geeignet. Eine Metallegierung, die ein beliebiges Metall und mindestens ein Metall der zweiten beziehungsweise dritten Hauptgruppe des Periodensystems, ein Übergangsmetall, ein Lanthanidenmetall und/oder ein Actinidenmetall enthält kann als Gettermaterial ebenfalls in den Anodenraum der Speicherzelle eingefüllt werden. Eine chemische Verbindung, die ein Gettermetall enthält, und die zur Freisetzung des Gettermetalls zwischen der Ruh-Temperatur der Speicherzelle und 500°C zersetzbar ist, kann ebenfalls zur Beseitigung von Sauerstoffbestandteilen im Anodenraum Verwendung finden. Eine besonders hohe Wirksamkeit des Fangmaterials ist dann gegeben, wenn es eine grosse Oberfläche aufweist, das heisst in fein verteilter Form im Anodenraum angeordnet ist. Vorzugsweise wird der Fangstoff beziehungsweise das Gettermaterial als Metallschwamm, in Form von Spähnen, als Metallgriess beziehungsweise -pulver oder als Metallfilz innerhalb des Anodenraumes angeordnet. Der Fangstoff kann auch als Überzug auf den im Anodenraum angeordneten Metallfilz aufgetragen werden. Ferner besteht die Möglichkeit, den Fangstoff als Überzug auf die Innenflächen des Anodenraumes aufzutragen. Wird der Fangstoff in Form eines Pulvers beziehungsweise Griesses in den Anodenraum gegeben, so kann er dem ebenfalls in den Anodenraum einzufüllenden kapillaraktiven Pulver beigemischt werden. Der

Fangstoff kann auch als Überzug auf ein Keramik- beziehungsweise Glaspulver aufgetragen werden, das anschliessend in den Anodenraum eingefüllt wird. Die Wirksamkeit des Fangstoffes, insbesondere seine Fähigkeit Sauerstoff zu absorbieren ist so gross, dass schon geringe Mengen ausreichen, um die Alkalimetallelektrode frei von Sauerstoff zu halten. Das Mengenverhältnis zwischen dem Fangstoff und dem Natrium wird vorzugsweise 1:10 bis 1:100 gewählt.

Ein weiterer Vorteil der Erfindung ist darin zu sehen, dass der eingangs erwähnte apparative und zeitliche Aufwand bei dem herkömmlichen Füllen der Speicherzellen mit Natrium jetzt entfällt, da das Natrium bei der hier beschriebenen Speicherzelle an der Luft oder nur unter einer Schutzglasglocke in die Speicherzelle gefüllt werden kann. Hierbei gelangt zwar Sauerstoff aus der Luft in Form von oberflächlich gebildetem Natriumoxid mit in den Anodenraum der Speicherzelle hinein. Dieser Sauerstoff wird jedoch von dem Fangstoff, insbesondere dem Gettermaterial, das sich in dem Anodenraum der erfindungsgemässen Speicherzelle befindet, chemisch gebunden. Das Binden des im Anodenraum befindlichen Sauerstoffes an den Fangstoff beruht darauf, dass die Bildungsenthalpien $\Delta G$-Werte) der Oxide des Fangmaterials dem Betrag nach grösser sind als die Bildungsenthalpie von $Na_2O$. Sie beträgt −67.0 kJ/mol.

Ein weiterer grosser Vorteil der erfindungsgemässen Speicherzelle, insbesondere des in den Anodenraum gefüllten Fangmaterials besteht darin, dass die Anforderungen an die Dichtung des Verschlusses der Natrium/Schwefel-Speicherzelle deutlich verringert werden können, da der durch die Undichtigkeiten der Speicherzelle mit der Zeit in den Anodenraum hineindiffundierende Sauerstoff von dem Fangstoff absorbiert wird. In vorteilhafterweise kann der Anodenraum bei der erfindungsgemässen Speicherzelle an der Luft verschlossen werden. Daraus ergibt sich die Möglichkeit, sehr einfache, schnelle und zeitsparende Schweissverfahren, wie zum Beispiel das WIG- oder MIG-Schweissverfahren einzusetzen.

Bisher musste für das Verschliessen ein aufwendiges Vakuum-Schweissverfahren wie zum Beispiel das Elektronenstahlschweissen angewendet werden.

Ein weiterer Vorteil des Fangstoffes ist darin zu sehen, dass er Wasser, das zum Beispiel mit der hygroskopischen Festelektrolykereamik in die Zelle eingeschleppt wird, in seiner Wirkung auf die Speicherzelle unschädlich macht.

Das in der oben beschriebenen Art und Weise in die Speicherzelle eingebrachte Wasser wird zunächst von dem Natrium aufgespalten, wobei Wasserstoff und Natriumoxid gebildet wird. Durch den im Anodenraum vorhandenen Fangstoff wird der Sauerstoff vom Natrium wieder abgespalten und bildet zusammen mit dem Metallfangstoff ein Metalloxid, so dass wieder reines Natrium entsteht. Anhand der nachfolgenden chemischen Gleichungen wird unter Verwendung von Zirkonium als Fangstoff die Zersetzung des in die Speicherzelle eingeschleppten Wassers beschrieben.

$$H_2O + 2Na \rightarrow H_2 + Na_2O$$

$$2Na_2O + Zr \rightarrow ZrO_2 + 4Na$$

Die erfindungsgemässe Speicherzelle wird nachfolgend anhand einer Figur erläutert.

Die Figur zeigt die erfindungsgemässe Speicherzelle 1, welche einen becherförmigen Körper 2 aus Metall, einen Festelektrolyten 3 und einen Stromabnehmer 4 aufweist. Bei dem becherförmigen Körper 2 aus Metall handelt es sich um einseitig geschlossenes Rohr, das beispielsweise aus einem dünnwandigem Aluminium gefertigt sein kann. Im Inneren des becherförmigen Körpers 2 ist der ebenfalls becherförmig ausgebildete Festelektrolyt 3 angeordnet. Hierbei handelt es sich um einseitig geschlossenes Rohr aus Beta-Aluminiumoxid. Die Abmessungen des Festelektrolyten 3 sind so gewählt, dass zwischen seinen äusseren Begrenzungsflächen und den inneren Begrenzungsflächen des Metallkörpers 2 überall ein Mindestabstand von einigen mm besteht. Dadurch wird ein zusammenhängender Zwischenraum 5 geschaffen, der als Kathodenraum dient. Dieser ist bei dem hier beschriebenen Beispiel mit einem Graphitfilz ausgefüllt, der mit Schwefel getränkt ist. Der Metallkörper 2 dient hierbei gleichzeitig als kathodischer Stromabnehmer. Der Innenbereich des Festelektrolyten 3 bildet den Anodenraum 6, in dem das Alkalimetall, insbesondere das Natrium, eingefüllt ist. Die Menge des in den Festelektrolyten 3 eingefüllten Natriums wird so gewählt, dass mindestens im aufgeladenen Zustand der Speicherzelle die seitlichen Begrenzungsflächen des Festelektrolyten vollständig von dem Natrium benutzt werden. Der becherförmige Festelektrolyt 3 weist an seinem offenen Ende einen Flansch aus Alpha-Aluminiumoxid auf, der zum Beispiel über ein Glaslot mit dem Festelektrolyten 3 verbunden ist. Der Flansch sitzt auf dem oberen Rand des Metallgehäuses auf, so dass der zwischen den Innenflächen des Metallgehäuses und dem Festelektrolyten liegende Kathodenraum 5 durch den Flansch verschlossen wird. Eine auf den Flansch 7 aufgelegte Deckplatte 8 verschliesst die Speicherzelle 1 nach aussen hin. Der hier beschriebene Verschluss ist nur schematisch dargestellt, wobei wesentliche Details nicht beschrieben sind, da sie für die Erfindung nicht wesentlich sind.

In den Anodenraum ragt der metallische Stromabnehmer 4 hinein, der die Deckplatte 8 durchsetzt und geringfügig über selbige nach aussen übersteht. Bei der hier beschriebenen Speicherzelle ist in den Anodenraum nicht nur das Natrium, sondern erfindungsgemäss ein Fangstoff 9 eingebettet, der $O_2$-Gettereigenschaften besitzt. Bei dem hier gezeigten Ausführungsbeispiel sind Zirkoniumkristalle als Fangstoff in den Anodenraum eingefüllt. Der übrige Bereich des Anodenraumes 6 ist vollständig mit Natrium ausgefüllt.

Die hier gezeigte Speicherzelle ist etwa 25 cm hoch und hat einen Aussendurchmesser von rund 4 cm. Der Festelektrolyt weist eine etwas geringere Höhe auf. Sein Innendurchmesser beträgt etwa 2 cm. Das Volumen seines Innenraumes beträgt etwa 70 $cm^3$. Um den Sauerstoff zu absorbieren, der sich innerhalb des Anodenraumes 6 ansammeln kann, sei es dadurch, dass er mit dem Natrium in Form von Natriumoxid eingebracht wird, oder im Laufe des Zell-Betriebes durch den Verschluss nach innen diffundiert, wird nur eine geringe Menge, insbesondere wenige Gramm Zirkonium 9 benötigt.

Durch das Einfüllen dieses Fangstoffes in den Anodenraum 6 kann das Natrium beim Herstellen der Speicherzelle mit einer vereinfachten Fülltechnik in den Anodenraum 6 gebracht werden. Insbesondere kann das Natrium an der Luft oder unter einer Schutzgasglocke eingefüllt werden. Für den Verschluss können herkömmliche Schweisstechniken zum Einsatz gebracht werden.

Anstelle des bei diesem Ausführungsbeispiel in den Anodenraum 6 eingebrachten Zirkoniums 9 können auch andere Fangstoffe verwendet werden. Insbesondere eignen sich Metalle der zweiten und dritten Hauptgruppe des Periodensystems. Vor allem sind hierfür Beryllium, Magnesium, Calcium, Strontium, Barium, Radium beziehungsweise Aluminium und Bor geeignet. Als Fangstoffe kommen auch Übergangsmetalle wie Vanadium, Niob, Tantal, Titan, und Hafnium in Frage. Lanthanidenmetalle wie Lanthan, Cer, Neodym, Praseodym, Samarium, Europium, Gadolium, Terbium, Dysprosium, Holmium, Erbium, Thulium, Ytterbium, Lutetium, können ebenfalls zur Anwendung kommen. Actinidenmetalle wie Thorium, Protactinium und Uran sind ebenfalls als Fangstoff geeignet.

Ferner können als Fangstoffe Metallegierungen verwendet werden, die Metalle der zweiten beziehungsweise der dritten Hauptgruppe des Periodensystems, Übergangsmetalle, Lanthanidenmetalle und Actinidenmetalle enthalten.

Der in den Anodenraum 6 eingefüllte Fangstoff kann auch durch eine Legierung gebildet werden, die wenigstens ein beliebiges Metall und mindestens ein Metall der zweiten beziehungsweise der dritten Hauptgruppe des Periodensystems, ein Übergangsmetall, ein Lanthanidenmetall und/oder Actinidenmetall enthält. Eine optimale Wirkung des Fangstoffes wird dann erreicht, wenn es mit einer möglichst grossen Oberfläche im Anodenraum 6 angeordnet wird. Vorzugsweise wird der Fangstoff in Form von Kristallen in den Anodenraum 6 gegeben. In Form von Metallgriess ist die Wirkungsweise des Fangstoffes ebenfalls sehr gut. Fangstoffe in Form eines Metallschwammes oder -filzes können ebenfalls Verwendung finden. Metallfolien können einfach gehandhabt werden und lassen sich in kleinste Anodenräume einsetzen. Es besteht ferner die Möglichkeit den Fangstoff als Überzug auf den im Anodenraum 6 angeordneten Metallfilz aufzutragen. Um die Oberfläche des Fangstoffes vergrössern zu können, kann er auch als Überzug auf ein Glas- oder Keramikpulver aufgetragen werden, das anschliessend in den Anodenraum 6 gefüllt wird.

Die Erfindung beschränkt sich nicht nur auf das oben beschriebene Ausführungsbeispiel und die in der Beschreibung angegebenen Fangstoffe, vielmehr umfasst die Erfindung alle Gettermaterialien, die Sauerstoff absorbieren.

**Patentansprüche**

1. Elektrochemische Speicherzelle (1) auf der Basis von Alkalimetall und Chalkogen mit mindestens einem für die Aufnahme des Anolyten bestimmten Anodenraum (6) und einem für die Aufnahme des Katholyten bestimmten Kathodenraum (5), welche durch eine alkaliionenleitende Festelektrolytwand (3) voneinander getrennt sind, wobei im Anodenraum ein Fangstoff (9) zusätzlich enthalten ist, dadurch gekennzeichnet, dass in dem Anodenraum (6) das Natrium und der Fangstoff (9) mit $O_2$-Gettereigenschaften in einem Verhältnis von 1:10 bis 1:100 angeordnet sind und dass der Fangstoff als Metallfilz, als Überzug auf einem Metallfilz oder in einem Metallfilz eingebettet im Anodenraum vorliegt.

2. Elektrochemische Speicherzelle (1) auf der Basis von Alkalimetall und Chalkogen mit mindestens einem für die Aufnahme des Anolyten bestimmten Anodenraum (6) und einem für die Aufnahme des Katholyten bestimmten Kathodenraum (5), welche durch eine alkaliionenleitende Festelektrolytwand (3) voneinander getrennt sind, wobei im Anodenraum ein Fangstoff (9) zusätzlich enthalten ist, dadurch gekennzeichnet, dass in dem Anodenraum (6) das Natrium und der Fangstoff (9) mit $O_2$-Gettereigenschaften in einem Verhältnis von 1:10 bis 1:100 angeordnet sind und dass der Fangstoff eine chemische Verbindung ist, die ein Gettermetall enthält, welche zur Freisetzung des Gettermetalls zwischen der Ruhetemperatur der Speicherzelle und 500°C zersetzbar ist.

3. Elektrochemische Speicherzelle (1) auf der Basis von Alkalimetall und Chalkogen mit mindestens einem für die Aufnahme des Anolyten bestimmten Anodenraum (6) und einem für die Aufnahme des Katholyten bestimmten Kathodenraum (5), welche durch eine alkaliionenleitende Festelektrolytwand (3) voneinander getrennt sind, wobei im Anodenraum ein Fangstoff (9) zusätzlich enthalten ist, dadurch gekennzeichnet, dass in dem Anodenraum (6) das Natrium und der Fangstoff (9) mit $O_2$-Gettereigenschaften in einem Verhältnis von 1:10 bis 1:100 angeordnet sind und dass der Fangstoff als Metallgriess in den Anodenraum (6) eingefüllt ist.

4. Elektrochemische Speicherzelle (1) auf der Basis von Alkalimetall und Chalkogen mit mindestens einem für die Aufnahme des Anolyten bestimten Anodenraum (6) und einem für die Aufnahme des Katholyten bestimmten Kathodenraum (5), welche durch eine alkaliionenleitende Festelektrolytwand (3) voneinander getrennt

sind, wobei im Anodenraum ein Fangstoff (9) zusätzlich enthalten ist, dadurch gekennzeichnet, dass in dem Anodenraum (6) das Natrium und der Fangstoff (9) mit $O_2$-Gettereigenschaften in einem Verhältnis von 1:10 bis 1:100 angeordnet sind und dass der Fangstoff in Form einer Folie in den Anodenraum (6) eingesetzt ist.

5. Elektrochemische Speicherzelle (1) auf der Basis von Alkalimetall und Chalkogen mit mindestens einem für die Aufnahme des Anolyten bestimmten Anodenraum (6) und einem für die Aufnahme des Katholyten bestimmten Kathodenraum (5), welche durch eine alkaliionenleitende Festelektrolytwand (3) voneinander getrennt sind, wobei im Anodenraum ein Fangstoff (9) zusätzlich enthalten ist, dadurch gekennzeichnet, dass in dem Anodenraum (6) das Natrium und der Fangstoff (9) mit $O_2$-Gettereigenschaften in einem Verhältnis von 1:10 bis 1:100 angeordnet sind und dass der Fangstoff als Überzug auf die Innenfläche des Anodenraumes (6) oder als Überzug auf ein in den Anodenraum (6) eingefülltes Glas- oder Keramikpulver aufgetragen ist.

6. Speicherzelle nach einem der Ansprüche 1 oder 3 bis 5, dadurch gekennzeichnet, dass der Fangstoff (9) ein Metall der zweiten Hauptgruppe des Periodensystems ist.

7. Speicherzelle nach einem der Ansprüche 1 oder 3 bis 5, dadurch gekennzeichnet, dass der Fangstoff (9) ein Metall der dritten Hauptgruppe des Periodensystems ist.

8. Speicherzelle nach einem der Ansprüche 1 oder 3 bis 5, dadurch gekennzeichnet, dass der Fangstoff (9) ein Übergangsmetall ist.

9. Speicherzelle nach einem der Ansprüche 1 oder 3 bis 5, dadurch gekennzeichnet, dass der Fangstoff (9) ein Lanthanidenmetall ist.

10. Speicherzelle nach einem der Ansprüche 1 oder 3 bis 5, dadurch gekennzeichnet, dass der Fangstoff (9) ein Actinidenmetall ist.

11. Speicherzelle nach einem der Ansprüche 1 oder 3 bis 5, dadurch gekennzeichnet, dass der Fangstoff (9) eine Metallegierung ist, die Metalle der zweiten oder dritten Hauptgruppe des Periodensystems, Übergangsmetalle, Lanthanidenmetalle und/oder Actinidenmetalle enthält.

12. Speicherzelle nach einem der Ansprüche 1 oder 3 bis 5, dadurch gekennzeichnet, dass der Fangstoff (9) eine Legierung ist, die wenigstens ein beliebiges Metall und mindestens ein Metall der zweiten beziehungsweise dritten Hauptgruppe des Periodensystems, ein Übergangsmetall, ein Lanthanidenmetall und/oder ein Actinidenmetall enthält.

**Claims**

1. Electrochemical storage cell (1) based on alkali metal and chalkogen with at least one anode region (6) intended for receiving the anolyte and one cathode region (5) intended for receiving the catholyte, which are separated from each other by a solid electrolyte partition (3) which conducts alkali ions, the anode region additionally containing a scavenging material (9), characterised in that the sodium and the scavenging material (9) with $O_2$-gettering properties are disposed in the anode region (6) in a ratio of 1:10 to 1:100, and that the scavenging material is present as a metal felt, as a coating on a metal felt or is embedded in a metal felt in the anode region.

2. Electrochemical storage cell (1) based on alkali metal and chalkogen with at least one anode region (6) intended for receiving the anolyte and one cathode region (5) intended for receiving the catholyte, which are separated from each other by a solid electrolyte partition (3) which conducts alkali ions the anode region additionally containing a scavenging material (9), characterised in that the sodium and the scavenging material (9) with $O_2$-gettering properties are disposed in the anode region (6) in a ratio of 1:10 to 1:100, and that the scavenging material is a chemical compound which contains a gettering metal, which compound is decomposable between the quiescent temperature of the storage cell and 500°C for the purpose of releasing the gettering metal.

3. Electrochemical storage cell (1) based on alkali metal and chalkogen with at least one anode region (6) intended for receiving the anolyte and one cathode region (5) intended for receiving the catholyte, which are separated from each other by a solid electrolyte partition (3) which conducts alkali ions, the anode region additionally containing a scavenging material (9), characterised in that the sodium and the scavenging material (9) with $O_2$-gettering properties are disposed in the anode region (6) in a ratio of 1:10 to 1:100, and that the scavenging material is loaded into the anode region (6) as a coarse metal powder.

4. Electrochemical storage cell (1) based on alkali metal and chalkogen with at least one anode region (6) intended for receiving the anolyte and one cathode region (5) intended for receiving the catholyte, which are separated from each other by a solid electrolyte partition (3) which conducts alkali ions, the anode region additionally containing a scavenging material (9), characterised in that the sodium and the scavenging material (9) with $O_2$-gettering properties are disposed in the anode region (6) in a ratio of 1:10 to 1:100, and that the scavenging material is inserted into the anode region (6) in the form of a foil.

5. Electrochemical storage cell (1) based on alkali metal and chalkogen with at least one anode region (6) intended for receiving the anolyte and one cathode region (5) intended for receiving the catholyte, which are separated from each other by a solid electrolyte partition (3) which conducts alkali ions, the anode region additionally containing a scavenging material (9), characterised in that the sodium and the scavenging material (9) with $O_2$-gettering properties are disposed in the anode region (6) in a ratio of 1:10 to 1:100, and that the scavenging material is deposited on the internal surface of the anode region (6) or, as a coating, on a glass or ceramic powder loaded into the anode region (6).

6. Storage cell according to one of the claims 1 or 3 to 5, characterised in that the scavenging

material (9) is a metal of the second main group of the periodic system.

7. Storage cell according to one of the claims 1 or 3 to 5, characterised in that the scavenging material (9) is a metal of the third main group of the periodic system.

8. Storage cell according to one of the claims 1 or 3 to 5, characterised in that the scavenging material (9) is a transition metal.

9. Storage cell according to one of the claims 1 or 3 to 5, characterised in that the scavenging material (9) is a lanthanide metal.

10. Storage cell according to one of the claims 1 or 3 to 5, characterised in that the scavenging material (9) is an actinide metal.

11. Storage cell according to one of the claims 1 or 3 to 5, characterised in that the scavenging material (9) is a metal alloy which contains metals of the second or third main group of the periodic system, transition metals, lanthanide metals and/or actinide metals.

12. Storage cell according to one of the claims 1 or 3 to 5, characterised in that the scavenging material (9) is an alloy which contains any metal and at least one metal of the second or third main group of the periodic system, a transition metal, a lanthanide metal and or an actinide metal.

**Revendications**

1. Cellule accumulatrice électrochimique (1) à base de métal alcalin et de chalcogène comprenant au moins une chambre anodique (6) destinée à recevoir l'anolyte et une chambre cathodique (5) destinée à recevoir le catholyte, ces chambres étant séparées l'une de l'autre par une paroi d'électrolyte solide (3) conductrice des ions alcalins, une substance de fixation (9) étant contenue en supplément dans la chambre anodique, caractérisée en ce que, dans la chambre anodique (6), le sodium et la substance de fixation (9) à propriétés de getter $O_2$ sont prévus dans des proportions de 1/10 à 1/100 et en ce que la substance de fixation se présente dans la chambre anodique sous la forme d'un feutre métallique, sous la forme d'un revêtement sur un feutre métallique ou à l'état noyé dans un feutre métallique.

2. Cellule accumulatrice électrochimique (1) à base de métal alcalin et de chalcogène comprenant au moins une chambre anodique (6) destinée à recevoir l'anolyte et une chambre cathodique (5) destinée à recevoir le catholyte, ces chambres étant séparées l'une de l'autre par une paroi d'électrolyte solide (3) conductrice d'ions alcalins, une substance de fixation (9) étant contenue en supplément dans la chambre anodique, caractérisée en ce que, dans la chambre anodique (6), le sodium et la substance de fixation (9) à propriétés de getter de $O_2$ sont prévus dans des proportins de 1/10 à 1/100 et en ce que la substance de fixation est un composé chimique qui contient un getter métallique qui peut être décomposé entre la température de repos de la cellule accumulatrice et 500°C pour la libération du getter métallique.

3. Cellule accumulatrice électrochimique (1) à base de métal alcalin et de chalcogène comprenant au moins une chambre anodique (6) destinée à recevoir l'anolyte et une chambre cathodique (5) destinée à recevoir le catholyte, ces chambres étant séparées l'une de l'autre par une paroi d'électrolyte solide (3) conductrice des ions alcalins, une substance de fixation (9) étant contenue en supplément dans la chambre anodique, caractérisée en ce que, dans la chambre anodique (6) le sodium et la substance de fixation (9) à propriétés de getter de $O_2$ sont prévus dans des proportions de 1/10 à 1/100 et en ce que la substance de fixation est introduite dans la chambre anodique (6) sous la forme d'une grenaille métallique.

4. Cellule accumulatrice électrochimique (1) à base de métal alcalin et de chalcogène comprenant au moins une chambre anodique (6) destinée à recevoir l'anolyte et une chambre cathodique (5) destinée à recevoir le catholyte, ces chambres étant séparées l'une de l'autre par une paroi d'électrolyte solide (3) conductrice d'ions alcalins, une substance de fixation (9) étant contenue en supplément dans la chambre anodique, caractérisée en ce que dans la chambre anodique (6), le sodium et la substance de fixation (9) à propriétés de getter de $O_2$ sont prévus dans des proportions de 1/10 à 1/100 et en ce que la substance de fixation est mise en œuvre dans la chambre anodique (6) sous la forme d'une feuille.

5. Cellule accumulatrice électrochimique (1) à base de métal alcalin et de chalcogène comprenant au moins une chambre anodique (6) destinée à recevoir l'anolyte et une chambre cathodique (5) destinée à recevoir le catholyte, ces chambres étant séparées l'une de l'autre par une paroi d'électrolyte solide (3) conductrice d'ions alcalins, une substance de fixation (9) étant contenue en supplément dans la chambre anodique, caractérisée en ce que dans la chambre anodique (6), le sodium et la substance de fixation (9) à propriétés de getter de $O_2$ sont prévus dans des proportions de 1/10 à 1/100 et en ce que la substance de fixation est appliquée sous la forme d'un revêtement sur la surface interne de la chambre anodique (6) ou sous la forme d'un revêtement sur une poudre de verre ou de céramique introduite dans la chambre anodique (6).

6. Cellule accumulatrice suivant les revendications 1 ou 3 à 5, caractérisée en ce que la substance de fixation (9) est un métal du deuxième groupe principal de la classification périodique.

7. Cellule accumulatrice suivant l'une des revendications 1 ou 3 à 5, caractérisée en ce que la substance de fixation (9) est un métal du troisième groupe principal de la classification périodique.

8. Cellule accumulatrice suivant une des revendications 1 ou 3 à 5, caractérisée en ce que la substance de fixation (9) est un métal de transition.

9. Cellule accumulatrice suivant une des revendications 1 ou 3 à 5, caractérisée en ce que la substance de fixation (9) est un lanthanide.

10. Cellule accumulatrice suivant une des revendications 1 ou 3 à 5, caractérisée en ce que la substance de fixation (9) est un actinide.

11. Cellule accumulatrice suivant une des revendications 1 ou 3 à 5, caractérisée en ce que la substance de fixation (9) est un alliage métallique qui contient des métaux du deuxième ou du troisième groupe principal de la classification périodique, des métaux de transition, des lanthanides ou des actinides.

12. Cellule accumulatrice suivant une des revendications 1 ou 3 à 5, caractérisée en ce que la substance de fixation (9) est un alliage qui contient au moins un métal quelconque et au moins un métal du deuxième ou du troisième groupe principal de la classification périodique, un métal de transition, un lanthanide et/ou un actinide.

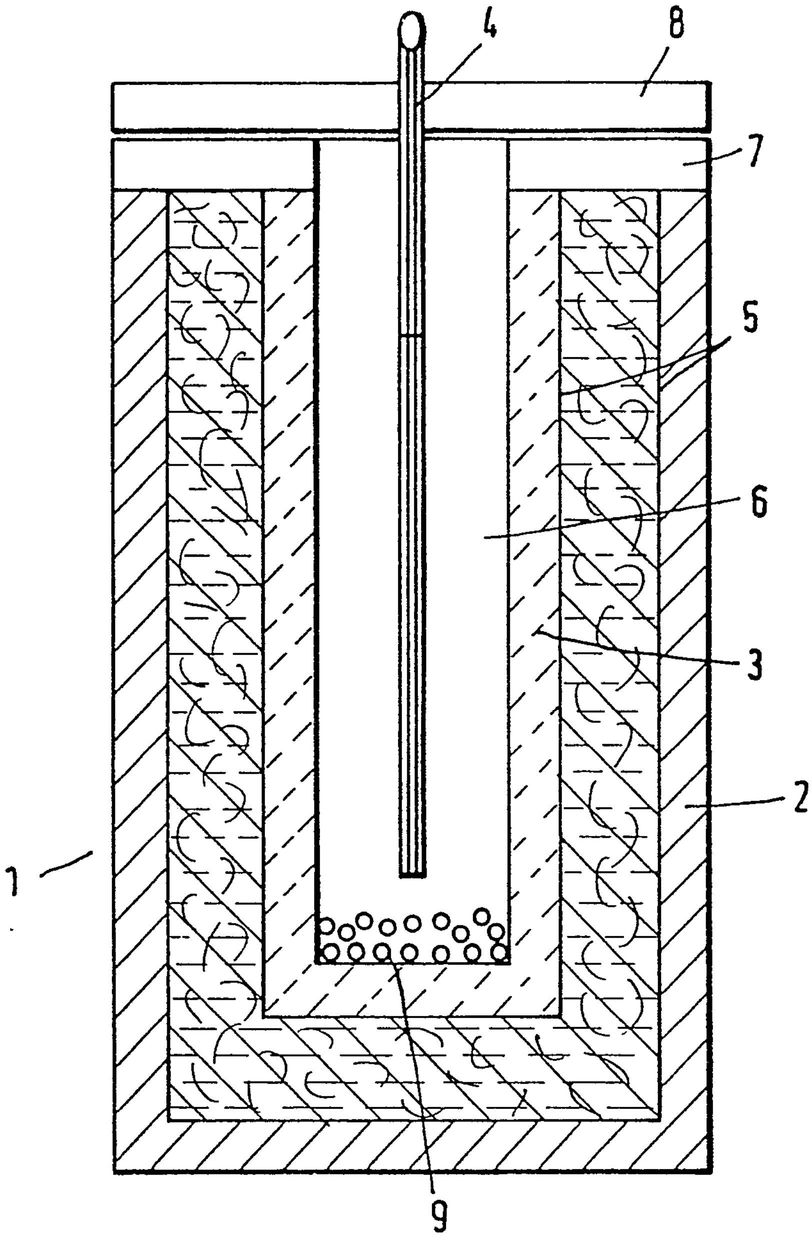
4
8
7
5
6
3
2
1
9